# EUROPEAN PATENT SPECIFICATION

(11) **EP 0 400 815 B1**
(45) Date of publication and mention of the grant of the patent: **13.01.1993**
(21) Application number: 90304775.1
(22) Date of filing: 02.05.1990
(51) Int. Cl.: B60R 1/06

(54) **Exterior mirror for motor vehicle**
Aussenspiegel für ein Kraftfahrzeug
Rétroviseur extérieur pour véhicule automobile

(30) Priority: 27.05.1989 GB 8912267
(43) Date of publication of application: 05.12.1990
(73) Proprietor: BRITAX (GECO) S.A., F-77981 Saint Fargeau Ponthierry (FR)
(72) Inventor: Harry, Jean-Michael, F-77210 Avon (FR)
(74) Representative: Hollinghurst, Antony

(56) References cited:
- EP-A- 0 206 758
- DE-A- 3 032 392
- GB-A- 2 048 192

## Description

This invention relates to an exterior mirror for a motor vehicle of the type having a base member adapted to be mounted on the vehicle body, a housing containing a reflective member and having an end adapted, in normal use, to abut against the base member, pivotal mounting means mounting the housing on the base member for relative angular movement about an axis adjacent to the rear edge of the base member between a first position in which the end of the housing abuts the base member and a second position in which the housing lies parallel to the vehicle body and resilient means arranged to resist displacement of said end of the housing out of abutment with the base member.

EP-A-0206758 discloses a mirror of this type. The front of the housing (i.e. the side opposite to that from which the reflective member is visible) and the adjacent surface of the base member are shaped to form a continuous smoothly curving surface in order to minimise turbulence in the air stream past the side of the vehicle due to the mirror housing. The effect of this is that the thickness of the housing is substantially greater than that which is necessary to accommodate the mechanism supporting the reflective member. In order to facilitate forward pivoting of the housing, the base member is formed of an elastic flexible material. It is desirable that, when the housing is pivoted rearwardly so as to lie parallel to the side of the vehicle, the distance to which the housing and the base member project from the side of the vehicle should be minimised.

According to the invention, in an exterior mirror of the foregoing type, the front wall of the housing is formed of flexible material and puller means connects the interior of said front wall with the base member so as to pull the front wall of the housing towards the reflective member when the housing pivots towards its second position.

In one form of the invention, the puller means comprises a lever having one end pivotally mounted on the mounting for the reflective member and its other end connected by a coupling member to the base member, and resilient means connecting the lever to the front wall of the housing. Such resilient means is preferably formed integrally with the front wall of the housing.

The coupling member may comprise a rigid link having one end pivotally connected to the lever and the other end carrying a pivot pin which engages in a slot in the base member.

An embodiment of the invention will now be described, by way of example, with reference to the accompanying drawings in which:
Figure 1 is a horizontal cross-sectional view of a rear view mirror in accordance with the invention with the housing in its normal position;
Figure 2 is a cross-sectional view, similar to Figure 1, showing the housing displaced forwardly from its normal position;
Figure 3 is a cross-sectional view, similar to Figure 1 but showing the housing pivoted rearwardly from its normal position.

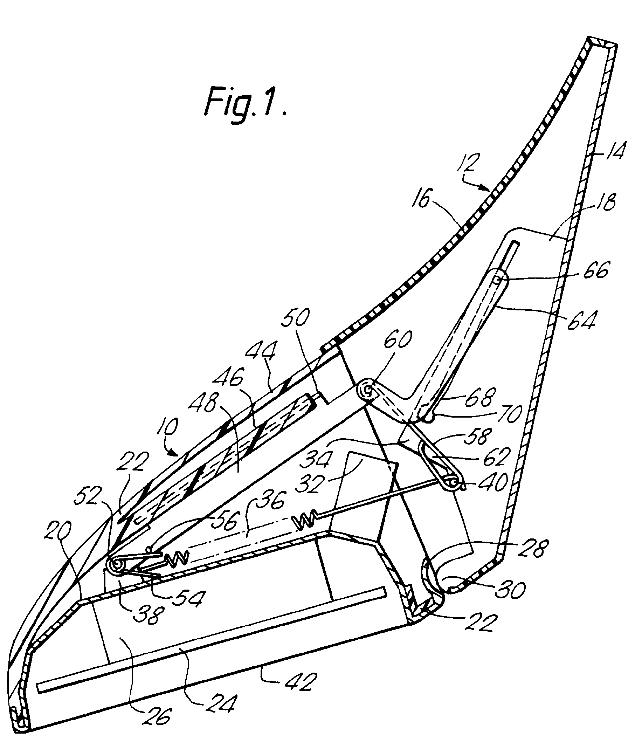

Referring to Figure 1, a mirror comprises a housing 10 mounted on a hollow base member 12 which has a rigid base plate 14 adapted to abut against a vehicle body. The base member 12 also has a curved outer wall 16, made of an elastic flexible material such as synthetic rubber, and a rigid mounting flange 18 which projects within the base member from its base plate 14 towards its front wall 16.

The housing 10 consists of a rigid body 20 and a flexible outer case 22, also made of an elastic flexible material such as synthetic rubber. The rigid body 20 is generally cup-shaped, having a reflective member 24 mounted on its inner surface by mounting means 26 (not shown in detail) permitting adjustment of the orientation of the reflective member 24 relative to the body 20. Adjacent to its rear inboard corner, the rigid body 20 has an arcuate flange 28 which normally engages with a projection 30 on the flange 18 in the base 12. The rigid body 20 also has a projection 32 which abuts against a corner 34 on the flange 18. A tension spring 36 extends from a flange 38 on the convex side of the rigid body 20 to a peg 40 on the flange 18 in the base 12 so as to urge the arcuate flange 28 into abutment of the formation 30 and the projection 32 into abutment with the corner 34 thereby holding the housing 10 in its normal position relative to the base 12.

The flexible case 22 of the housing 10 is secured to the rigid body 20 thereof around its entire rear edge 42. When the housing 10 is in its normal position illustrated in Figure 1, the front wall 44 of the flexible case 22 is overlapped by the front wall 16 of the base 12. Inside its front wall 44, the flexible case 22 has an integral web 46 which joins the front wall 44 along the side and outer edges of the web 46 but is spaced therefrom along its inner edge confronting the base member 12. A lever 48, having a flange 50 which is embedded in the web 46, is pivotally mounted at one end on a pivot pin 52 secured to the flange 38 on the rigid body 20. A two-arm spring 54, mounted on the pin 52, engages between the rigid body 20 and a peg 56 on the lever 48 to bias the latter in the counter-clockwise direction as viewed in Figure 1.

A wire link 58 has one end engaging round a pivot pin 60 at the free end of the lever 48 and the other end forming a slot 62 which engages round the peg 40 on the flange 18 in the base member 12. The length of the link 58 is chosen to be such as to restrict counter-clockwise movement of the lever 48 so as to prevent the edge of the front wall 16 of the base member 12 from distorting the front wall 44 of the case 22 when the housing 10 is in its normal position shown in Figure 1. The pivot pin 60 on the lever 48 also pivotally engages with an L-shape link 64, the other end of which carries a pivot pin 66 which engages in a slot 68 in the flange 18 in the base member 12.

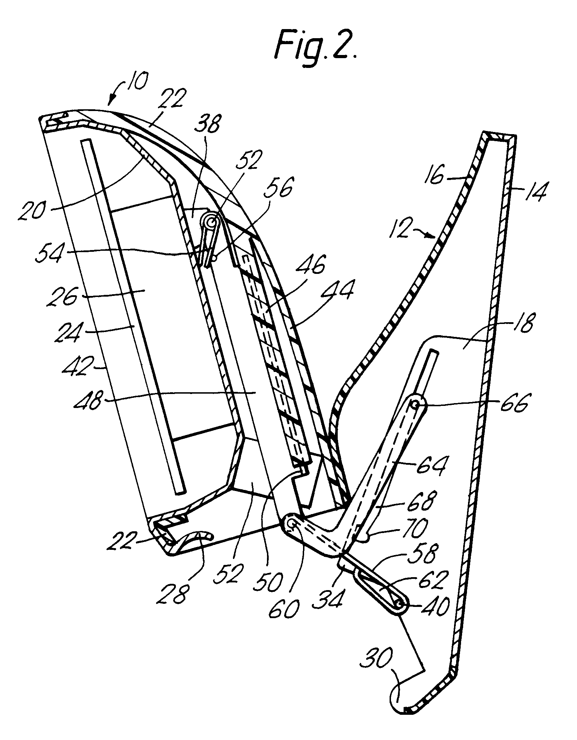

When the housing 10 is subject to a force tending to displace it forwardly relative to the base member 12, the housing 10 pivots about the point of abutment between the projection 32 and the corner 34 on the flange 18, as shown in Figure 2. The engagement of the pivot pin 66 in the end of the slot 68 causes the lever 64 to displace the lever 48 in the clockwise direction, pulling the front wall 44 of the case 22 towards the rigid body 26 so as to prevent contact with the adjacent edge of the front wall 16 of the base 12 until forward displacement is almost complete. During the last stages of forward movement, the edge of the front wall 16 of the base 12 merely depresses the front wall 44 of the case 22 and does not rub against it. The slot 62 formed by the link wire 58 prevents this movement being obstructed by the peg 40.

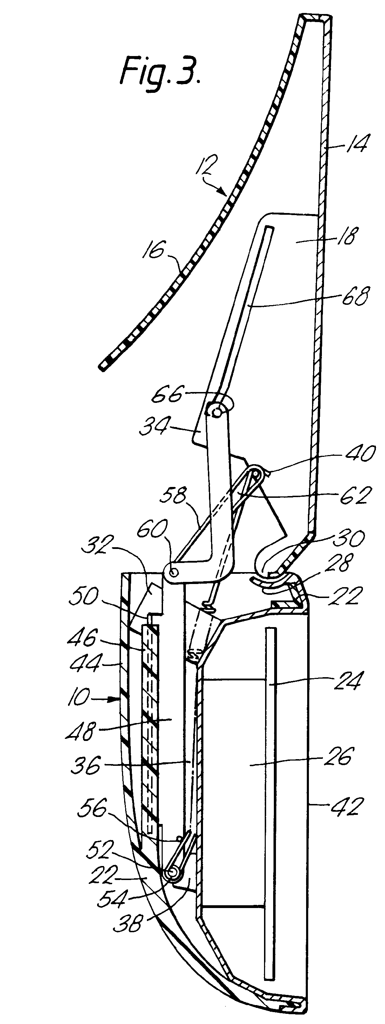

When the housing 10 is subject to a rearward displacement force, it pivots on the point of abutment between the arcuate flange 28 and the projection 30 on the flange 18, as shown in Figure 3. The link 58 pulls the lever 48 in the clockwise direction, against the action of the spring 54 so as to pull the front wall 44 of the flexible case 22 towards the rigid body 20. At the same time, the pin 66 moves along the slot 68 in the flange 18. The rear end of the slot 68 has a step formation 70 (best seen in Figure 2) in which the pin 66 can engage to retain the housing 10 parked in its fully displaced position as shown in Figure 3. The front wall 44 of the flexible case 22 now projects from the vehicle body (coincident with the base plate 14) to about the same extent as the wall 16 of the base member 12. A slight outward force on the housing 10 is sufficient to dislodge the pin 66 from the step formation 70 of the slot 68 and allow the tension spring 36 to pull it back to its original position shown in Figure 1.

## Claims

1. An exterior mirror for a motor vehicle comprising a base member (12) adapted to be mounted on the vehicle body, a housing (10) containing a reflective member (24) and having an end adapted, in normal use, to abut against the base member (12), pivotal mounting means (28, 30) mounting the housing (10) on the base member (12) for relative angular movement about an axis adjacent to the rear edge of the base member (12) between a first position in which the end of the housing (10) abuts the base member (12) and a second position in which the housing (10) lies parallel to the vehicle body and resilient means (36) arranged to resist displacement of said end of the housing (10) out of abutment with the base member (12), whereby the front wall (44) of the housing (10) is formed of flexible material characterised in that puller means (48, 64) connects the interior of said front wall (44) with the base member (12) so as to pull the front wall (44) of the housing (10) towards the reflective member (24) when the housing (10) pivots towards its second position.

2. An exterior mirror according to claim 1, wherein the puller means comprises a lever (48) having one end (52) pivotally mounted on the mounting for the reflective member (24) and its other end (60) connected by a coupling member (64) to the base member (12), and resilient means (46) connecting the lever to the front wall (44) of the housing (10).

3. An exterior mirror according to claim 2, wherein the resilient means (46) connecting the lever to the front wall (44) of the housing (10) is formed integrally with the front wall (44) of the housing (10).

4. An exterior mirror according to claim 2 or 3, wherein the coupling member comprises a rigid link (64) having a first end (60) pivotally connected to the lever (48) and its other end carrying a pivot pin (66) which engages in a slot (68) in the base member (12).

5. An exterior mirror according to claim 4, wherein a slotted link (58) extends between the first end (60) of the rigid link and a peg (40) on the base member (12).

## Revendications

1. Un rétroviseur extérieur pour un véhicule à moteur comprenant un élément de base (12) apte à être monté sur la carrosserie de véhicule, un boîtier (10) contenant un élément réfléchissant (24) et comportant une extrémité apte à venir en butée, en utilisation normale, contre l'élément de base (12),des moyens de montage à pivotement (28, 30) destinés au montage du boîtier (10) sur l'élément de base (12) en vue d'un mouvement angulaire relatif autour d'un axe adjacent au bord arrière de l'élément de base (12) entre une première position dans laquelle l'extrémité du boîtier (10) vient en butée contre l'élément de base (12) et une deuxième position dans laquelle le boîtier (10) est parallèle à la carrosserie du véhicule, et un moyen élastique (36) agencé pour résister à un déplacement de ladite extrémité du boîtier (10) hors de butée avec l'élément de base (12), la paroi frontale (44) du boîtier étant formée d'une matière flexible, caractérisé en ce que des moyens de traction (48, 64) relient l'intérieur de ladite paroi avant (44) à l'élément de base (12) de façon à tirer la paroi frontale (44) du boîtier (10) vers l'élément réfléchissant (24) lorsque le boîtier (10) pivote vers sa deuxième position.

2. Un rétroviseur extérie ur selon la revendication 1, dans lequel les moyens de traction comprennent un levier (48), dont une extrémité (52) est montée sur le support de l'élément réfléchissant (24) et dont l'autre extrémité (60) est reliée par un élément d'accouplement (64) à l'élément de base (12), et un moyen élastique (46) reliant le levier à la paroi frontale (44) du boîtier (10).

3. Un rétroviseur extérieur selon la revendication 2, dans lequel le moyen élastique (46) reliant le levier à la paroi frontale (44) du boîtier (10) est formé d'un seul tenant avec la paroi frontale (44) du boîtier (10)

4. Un rétroviseur extérieur selon la revendication 2 ou 3, dans lequel l'élément d'accouplement comprend un bras de liaison rigide (64) dont une première extrémité (60) est reliée à pivotement au levier (48) et dont l'autre extrémité porte une broche de pivot (66) qui pénètre dans une fente de l'élément de base (12).

5. Un rétroviseur extérieur selon la revendication 4, dans lequel un bras de liaison (58) où est ménagée une fente (58) s'étend entre la première extrémité (60) du bras de liaison rigide et une cheville (40) sur l'élément de base (12).

## Patentansprüche

1. Außenspiegel für ein Kraftfahrzeug mit einem an die Fahrzeugkarosserie montierbaren Grundelement (12), einem ein reflektierendes Element (24) enthaltenden Gehäuse (10) mit einem Ende, das bei normalem Gebrauch am Grundelement (12) anliegen kann, Schwenkmontagevorrichtungen (28, 30), mit Hilfe derer das Gehäuse (10) an das Grundelement (12) montiert wird, so daß es sich in einem relativen Winkel um eine Achse in der Nähe der Hinterkante des Grundelementes (12) zwischen einer ersten Position, in der das Ende des Gehäuses (10) am Grundelement (12) anliegt, und einer zweiten Position, in der das Gehäuse (10) parallel zur Fahrzeugkarosserie liegt, bewegen kann, sowie einer elastischen Vorrichtung (36), die so angeordnet ist, daß sie verhindert, daß jenes Ende des Gehäuses (10) verschoben wird und außer Anlage mit dem Grundelement (12) gerät, wobei die Vorderwand (44) des Gehäuses (10) aus flexiblem Material besteht, dadurch gekennzeichnet, daß eine Zugvorrichtung (48, 64) das Innere jener Vorderwand (44) so mit dem Grundelement (12) verbindet, daß die Vorderwand (44) des Gehäuses (10) zum reflektierenden Element (24) hin gezogen wird, wenn das Gehäuse (10) in Richtung seiner zweiten Position schwenkt.

2. Außenspiegel nach Anspruch 1, bei dem die Zugvorrichtung einen Hebel (48), dessen eines Ende (52) schwenkbar an der Halterung des reflektierenden Elementes (24) montiert und dessen anderes Ende (60) durch ein Koppelelement (64) mit dem Grundelement (12) verbunden ist, und eine elastische Vorrichtung (46) umfaßt, die den Hebel mit der Vorderwand (44) des Gehäuses (10) verbindet.

3. Außenspiegel nach Anspruch 2, bei dem die den Hebel mit der Vorderwand (44) des Gehäuses (10) verbindende elastische Vorrichtung (46) einstückig mit der Vorderwand (44) des Gehäuses (10) ausgebildet ist.

4. Außenspiegel nach Anspruch 2 oder 3, bei dem das Koppelelement ein steifes Verbindungsglied (64) umfaßt, das mit einem ersten Ende (60) schwenkbar mit dem Hebel (48) verbunden ist und am anderen Ende einen Schwenkzapfen (66) trägt, der in einen Schlitz (68) im Grundelement (12) eingreift.

5. Außenspiegel nach Anspruch 4, bei dem sich zwischen dem ersten Ende (60) des steifen Verbindungsglieds und einem Stift (40) am Grundelement (12) ein ösenförmiges Verbindungsglied (58) erstreckt.
